# EUROPÄISCHE PATENTSCHRIFT

(11) **EP 1 412 668 B1**
(45) Veröffentlichungstag und Bekanntmachung des Hinweises auf die Patenterteilung: **16.11.2005**
(21) Anmeldenummer: 02751050.2
(22) Anmeldetag: 19.06.2002
(51) Int. Cl.: F16L 33/207

(54) **PRESSFITTING FÜR ROHRE**
COMPRESSION FITTING FOR TUBES
RACCORD A SERTIR DESTINE A DES TUYAUX

(30) Priorität: 28.07.2001 DE 10137078; 08.12.2001 DE 10160489
(43) Veröffentlichungstag der Anmeldung: 28.04.2004
(73) Patentinhaber: Uponor Innovation AB, 513 81 Fristad (SE)
(72) Erfinder: POSTLER, Stefan, 97461 Hofheim/Gossmannsdorf (DE); SCHOTT, Judith, 96120 Bischberg (DE)
(74) Vertreter: Hilleringmann, Jochen
(86) Internationale Anmeldenummer: PCT/EP2002/006796
(87) Internationale Veröffentlichungsnummer: WO 2003/012328

(56) Entgegenhaltungen:
- DE-C- 10 010 573
- FR-E- 54 476

## Beschreibung

Die Erfindung betrifft einen Pressfitting für Kunststoff- oder Mehrschichtverbundrohre.

Pressfittings weisen einen Fittingkörper mit einer Stützhülse auf, auf die das anzuschließende Ende eines Rohres aufgeschoben wird. Ein dichtes Verbinden des Rohrendes mit der Stützhülse erfolgt durch plastische, irreversible Verformung einer das Rohrende umgebenden Presshülse. Zur Abdichtung ist beispielsweise zwischen der Stützhülse und dem Rohrende ein O-Ring aus einem Elastomer vorgesehen. Derartige Pressfittings sind in einer Vielzahl von Ausgestaltungen, z.B. aus DE-C-197 07 827 oder DE-C-100 10 573 bekannt.

Zum Verbinden eines Pressfittings mit einem Rohrende wird gemäß dem Stand der Technik das Rohrende über die Stützhülse geschoben. Hierbei muss sichergestellt werden, dass das Dichtelement in Form des O-Rings nicht beschädigt wird. Der O-Ring ist in einer an der Außenfläche zur Stützhülse vorgesehenen Ringnut angeordnet. Um ein Beschädigen der üblicherweise zwei O-Ringe zu vermeiden, muss das Rohrende aufgeweitet und die in Richtung der Außenfläche der Stützhülse weisende Innenkante des Rohrendes entgratet werden. Ferner muss das Rohrende rechtwinklig abgeschnitten und gerade auf die Stützhülse aufgeschoben werden. Bei einem nicht rechtwinklig abgeschnittenen Rohr werden die O-Ringe während des Aufschiebens des Rohrendes ungleichmäßig belastet. Dies kann zur Verformungen des O-Rings sowie zum teilweise Herausdrücken des O-Rings aus der Ringnut führen. Hierdurch ist eine dauerhafte Abdichtung an dem Pressfitting nicht mehr gewährleistet. Aufgabe der Erfindung ist es, ein Pressfitting für Kunststoff- oder Mehrschichtverbundrohre zu schaffen, bei dem ein Beschädigen des Dichtelements beim Aufschieben des Rohrendes vermieden ist.

Die Lösung der Aufgabe erfolgt erfindungsgemäß durch die Merkmale des Anspruchs 1.

Erfindungsgemäß ist das Dichtelement wie beispielsweise ein O-Ring vollständig innerhalb der an der Außenfläche der Stützhülse angeordneten mindestens einen umlaufenden Ringnut angeordnet. Das Dichtelement steht somit nicht aus der Ringnut, das heißt nicht über die Außenfläche der Stützhülse hervor. Genauer gesagt gilt, dass das Dichtelement zumindest gegenüber der näher an den freien Enden der Stützhülse angeordneten Flanke der Aufnahmenut nicht übersteht; demgegenüber kann das Dichtelement über die andere Aufnahmenutflanke radial überstehen. Diese andere Flanke könnte also z.B. gegenüber der zuvor genannten Aufnahmenutflanke radial zurückspringen. Die erfindungsgemäße Anordnung hat zur Folge, dass beim Aufstecken eines Rohrendes die Innenkante des Rohrendes nicht mit dem Dichtelement in Berührung kommt. Ein Beschädigen des mindestens einen Dichtelements beim Aufstecken des Rohrendes auf die Stützhülse ist somit vermieden. Damit ist eine der häufigsten Ursachen für mögliche Undichtigkeiten von Pressverbindungen, nämlich eine Beschädigung des Dichtelements, ausgeräumt. Insbesondere ist es auf Grund der erfindungsgemäßen Anordnung des Dichtelements vollständig innerhalb der Ringnut nicht mehr erforderlich, das Rohrende vor dem Aufschieben auf die Stützhülse zu bearbeiten. Insbesondere ein Entgraten an der Innenkante des Rohrendes, ein Aufweiten des Rohrendes sowie ein exaktes rechtwinkliges Abtrennen ist nicht mehr erforderlich. Es sind somit weniger Arbeitsschritte zum Verbinden des Pressfittings mit dem Rohrende erforderlich. Ferner haben insbesondere beim Abschneiden des Rohrs auftretende Ungenauigkeiten keine Auswirkungen auf die Dichtigkeit der Verbindung. Die Aufnahmenut selbst kann jede beliebige Querschnittsform aufweisen und insbesondere rechteckig, dreieckig, abgestuft, parallelogrammähnlich, trapezförmig ausgebildet und mit oder ohne runde (konkav oder konvex gewölbte) Seitenflanken ausgestattet sein.

Zum dichten Verbinden des Pressfittings mit dem Rohr wird die Presshülse irreversibel plastisch verformt. Hierzu wird ein zangenartiges oder ein Umschlingungswerkzeug mit auf den Rohrdurchmesser sowie den Durchmesser der Presshülse abgestimmten Pressbacken eingesetzt. Die Pressbacken bzw. des Umschlingungselement (z.B. Presskette) können (kann) hierbei derart ausgebildet sein, dass sie einen umlaufenden ringförmigen Ansatz aufweisen/aufweist, durch den beim Verpressen der Presshülse sichergestellt ist, dass ein ausreichender Teil des Rohrmaterials in die umlaufende Dichtungselement-Aufnahmenut eingepresst wird. Dies ist erforderlich, um ein sicheres Abdichten des Rohres gegenüber der Stützhülse zu gewährleisten. Derartige Pressbacken/Pressketten sollten jedoch gesondert für den erfindungsgemäßen Pressfitting angefertigt werden.

Ein weiteres Ziel der Erfindung besteht daher darin, vorhandene Pressbacken bzw. Pressketten, die für bekannte Pressfittings verwendet werden, weiterhin auch für die erfindungsgemäßen Pressfittings einsetzen zu können. Dies hat den Vorteil, dass auch die erfindungsgemäßen Pressfittings mit den bestehenden Presswerkzeugen verarbeitet werden können. Vorteilhafterweise sind daher an einer Außenfläche der Presshülse der Ringnut gegenüberliegende Verformungsansätze vorgesehen (siehe Anspruch 3). Beim Verpressen des Rohrendes zur Abdichtung erfolgt das Einpressen von Rohrmaterial in die Ringnut somit mit Hilfe der Verformungsansätze. Auf Grund des Vorsehens von Verformungsansätzen können beispielsweise glatte zylindrische Pressbacken/Pressketten ohne Umfangsansätze verwendet werden, da das Einpressen von Rohrmaterial in die Ringnut durch das Verformen der Verformungsansätze in Richtung der Ringnut erfolgt. Diesem Aspekt der Erfindung kommt selbstständige Bedeutung zu, so dass der Pressfitting gemäß Anspruch 4 nicht notwendigerweise über die spezielle Ausbildung der Dichtungselement-Aufnahmenut verfügen muss.

Vorzugsweise ist der Verformungsansatz in Umfangsrichtung durchgehend ausgebildet. Dies hat den Vorteil, dass das Dichtelement gleichmäßig belastet wird und somit am gesamten Umfang der Stützhülse eine gleichmäßige Dichtwirkung sichergestellt ist.

In einer besonders bevorzugten Ausführungsform weist die Stützhülse an der Außenfläche mindestens zwei Ringnuten auf. Diesen Ringnuten ist jeweils ein vorzugsweise ringförmiger Verformungsansatz an der Außenfläche der Presshülse zugeordnet.

Beim Verpressen der Presshülse kann es auf Grund von Toleranzunterschieden vorkommen, dass zu viel Rohrmaterial in die Ringnut eingepresst wird, so dass eine Beschädigung des Dichtelements hervorgerufen wird. Dies hat zur Folge, dass ein dauerhaftes Abdichten nicht mehr gewährleistet ist. Dies ist insbesondere nachteilig, da derartige Undichtigkeiten erst nach längerer Zeit auftreten. Zweckmäßigerweise sind daher bei den erfindungsgemäßen Pressfittings mit mindestens zwei Ringnuten vorzugsweise die Volumina der einzelnen Verformungsansätze und/oder die Volumina der Ringnuten unterschiedlich. Dies hat zur Folge, dass eine unterschiedliche Menge an Rohrmaterial in die einzelnen Ringnuten eingepresst wird. Hierdurch ist sichergestellt, dass bei beispielsweise zu dünnen Dichtelementen, d. h. bei Dichtelementen, deren Dicke an der unteren Toleranzgrenze liegt, zumindest an dem Dichtelement ein sicheres Abdichten gewährleistet ist, in dessen Ringnut entweder ein größeres Volumen an Rohrmaterial eingepresst wird oder dessen Ringnut ein kleineres Volumen aufweist.

Zur lagegenauen Anordnung des Presswerkzeugs an der Presshülse, die je nach Ausführungsform erforderlich sein kann, um zu gewährleisten, dass die Verformungsansätze des Presswerkzeugs auf Höhe der Aufnahmenuten für die Dichtelemente angeordnet sind, weist der erfindungsgemäße Pressfitting vorzugsweise eine Fixiereinrichtung auf. Diese Fixiereinrichtung ist vorzugsweise als Formschluss zwischen Presswerkzeug und Presshülse ausgebildet, was z.B. durch beim Ansetzen des Presswerkzeuges an der Presshülse ineinandergreifende Vorsprungs- und Vertiefungsausbildungen an dem Presswerkzeug und den Presshülsen realisiert wird. Insbesondere ist als Fixiereinrichtung eine zwischen zwei benachbarten ringförmigen Verformungsansätzen ausgebildete Fixiernut vorgesehen. In diese Fixiernut greift ein umlaufender Ansatz der Pressbacken ein. Gemäß der zuvor beschriebenen selbstständigen Variante des erfindungsgemäßen Fittings und deren Weiterbildungen wird also die größte Verformungskraft auf die Presshülse in Höhe des bzw. der Dichtelemente aufgebracht.

Als Material für das/die Dichtelemente kommen insbesondere Gummiwerkstoffe, d.h. Elastomere in Frage. Werden diese Werkstoffe großen Anpresskräften ausgesetzt, so kommt es zu erheblichen mechanischen Spannungen und Reaktionskräften im Werkstoff. Daher sollte das Volumen der Aufnahmenut ausreichend groß gewählt sein. Insbesondere sollte beidseitig jedes Dichtelements innerhalb seiner Aufnahmenut ausreichend Spiel sein, so dass das Material des Dichtelements bei dessen Verpressung in diese Freiräume ausweichen kann. Die Nutausgestaltung sollte ferner so gewählt sein, dass eine ausreichende Verformungsmöglichkeit für das Dichtelement auch bei ungünstigen Toleranzlagen und unter Berücksichtigung des Temperatur-Ausdehnungsverhaltens immer gewährt bleibt. Durch die Verpressung wird erreicht, dass der Dichtring linienförmig in der Nut des Fittingkörpers und an der Innenfläche des Rohres anliegt. Der Dichtring behält die Elastizität und kann so unter anderem die Temperaturschwankungen besser kompensieren. Damit entsteht nach der Verpressung eine längskraftschlüssige Verbindung zwischen Dichtelement und Fitting sowie Rohr. Zweckmäßigerweise sollte für eine Zentrierung des Dichtelements innerhalb seiner Aufnahmenut gesorgt werden, was z. B. durch eine recht flache und zu beiden Seiten stufenlos auslaufende Vertiefung am Aufnahmenutgrund erfolgen kann, in der die Innenseite des Dichtelements leicht eingetaucht ist.

Die Dichtwirkung ergibt sich hauptsächlich aus der Verformung des elastomeren Dichtelements und der Dichtfläche (Anlagefläche des Dichtelements in der Aufnahmenut und an der Rohrwandung - Gegenflächen). Um eine optimale Dichtwirkung gegenüber Strömungs- und Diffusionsverlusten zu erreichen, sollte der Verformungsbereich des Dichtelements nach dem Verpressen etwa 15% bis 30% gegenüber der Form des Dichtelements im unverpressten Zustand betragen. Für einen O-Ring gilt also z.B., dass der Dichtring um ca. 15% bis 30% seines Durchmessers niedergedrückt werden sollte. Bei dem Pressfitting gemäß der hier zu betrachtenden Variante ist gewährleistet, dass im statistischen Mittel beide O-Ringe bzw. Dichtelemente und bei Größt- und Kleinstmaß (Toleranzbetrachtungen der einzelnen Elemente - Dichtelement, Nuttiefe etc.) immer ein O-Ring bzw. Dichtelement optimal abdichtet. Dies wird bei Verwendung zweier Dichtelemente durch unterschiedliche Außen- oder Innendurchmesser der Presshülse oder unterschiedlich starke Radialverpressungen in den in Höhe der Dichtelemente angeordneten Presshülsenbereichen erreicht.

Nachfolgend wird die Erfindung anhand einer bevorzugten Ausführungsform unter Bezugnahme auf die anliegenden Zeichnungen näher erläutert. Es zeigen:
- Fig. 1: eine schematische Seitenansicht eines erfindungsgemäßen Pressfittings,
- Fig. 2: einen schematischen Längsschnitt des in Fig. 1 dargestellten Pressfittings,
- Fig. 3: eine schematische Schnittansicht eines auf ein Rohrende aufgesteckten Pressfittings und
- Fig. 4: eine schematische Schnittansicht des in Fig. 3 dargestellten Pressfittings in verpresstem Zustand.

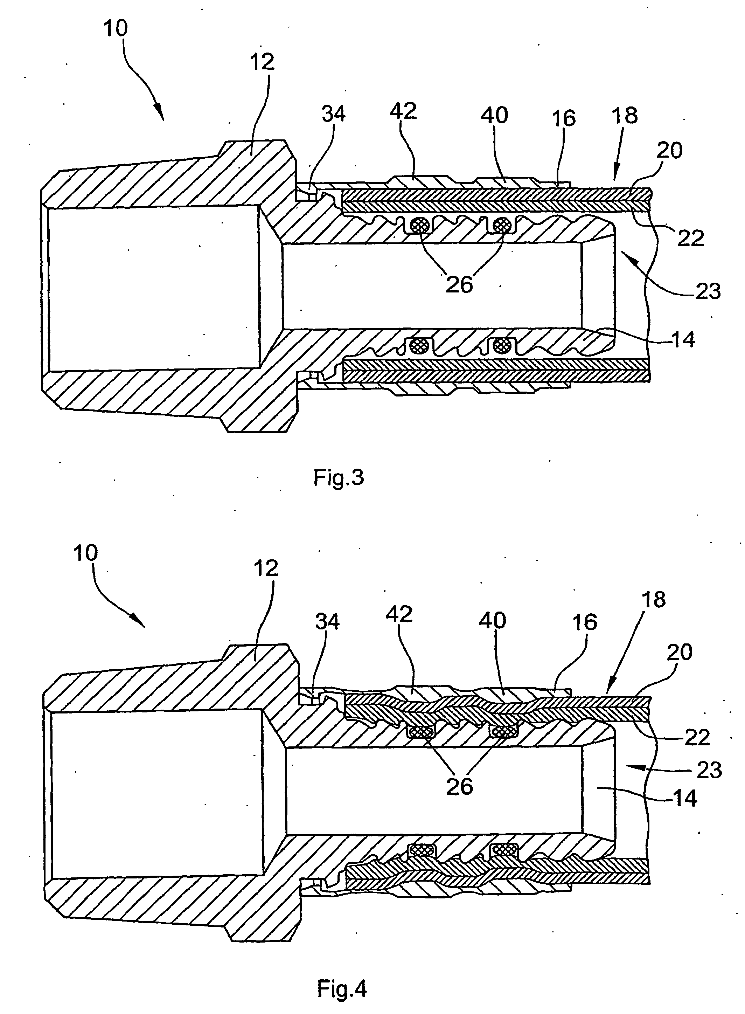

In dem dargestellten Ausführungsbeispiel weist der Pressfitting 10 einen z.B. mit einem Sechskant versehenen Fittingkörper 12 auf, der Metall oder Kunststoff oder einen Kunststoff-Metall-Verbundwerkstoff, z.B. insbesondere faserverstärktes PEX, PVDF, PSU, PPSU oder keramische Werkstoffe aufweist. Der Fittingkörper 12 ist mit einer Stützhülse 14 mit zylindrischem Innendurchmesser versehen. Die Stützhülse 14 ist von einer rohrförmigen Presshülse 16 umgeben. Zwischen die Stützhülse 14 und die Presshülse 16 wird ein mit dem Pressfitting 10 zu verbindendes Rohrende 18 (Fig. 3) eines beispielsweise zwei unterschiedliche Verbundmaterialen 20,22 aufweisenden Rohrs geschoben. Das Rohrende 18 wird über das freie Ende 23 der Stützhülse 14 auf diese aufgeschoben. Zum dichten Verbinden des Pressfittings 10 mit dem Rohrende 18 wird die Presshülse 16 in radialer Richtung gestaucht, so dass das Rohrende 18 mit der Stützhülse 14 und der Presshülse 16 verpresst ist (Fig. 4).

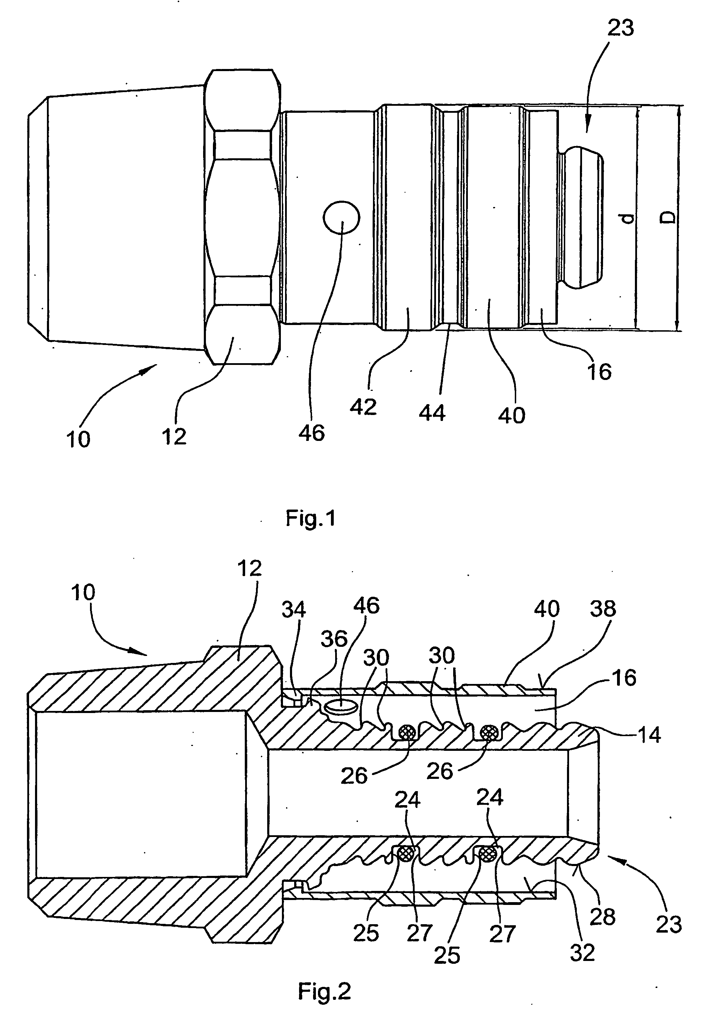

Die Stützhülse 14 weist zwei umlaufende Ringnuten 24 (Fig. 2) auf, in denen jeweils ein Dichtelement 26 in Form eines O-Rings angeordnet ist. Andere geometrische Querschnittsformen des Dichtelements 26 sind ebenfalls möglich (z.B. rechteckig, dreieckig, bandförmig). Als Material des Dichtelements 26 kommt z.B. Gummi, Elastomere oder vernetzte Kunststoffmaterialien in Frage. Jede (Aufnahme-)Ringnut 24 wird in axialer Richtung der Stützhülse 14 betrachtet durch zwei Seitenflanken 25 und 27 begrenzt, die in diesem Ausführungsbeispiel jeweils in Radialebenen verlaufen. Beide Seitenflanken 25 und 27 weisen eine Höhe (radiale Erstreckung) auf, die zumindest gleich der oder größer als die Höhe (Radialerstreckung) des Dichtelements 26 (in dessen entspannten Zustand) ist. Entscheidend ist dabei, dass die zuvor angegebenen Bemessungen der Radialerstreckung von Seitenflanke und Dichtelement zumindest für die dem freien Ende 23 der Stützhülse 14 zuwandte Seitenflanke 27 gilt, so dass die andere Seitenflanke 25 z.B. gegenüber dem Dichtelement 26 nach innen zurückspringen kann. Ferner sind an einer Außenfläche 28 der Stützhülse 14 mehrere ringförmige Vertiefungen 30 ausgebildet, die im Querschnitt sägezahnförmig sind. Durch die sägezahnförmige Ausgestaltung der umlaufenden Vertiefungen 30 erfolgt in verpresstem Zustand (Fig. 4) die Aufnahme von axialen Kräften, so dass ein Abziehen des Rohrendes 18 von der Stützhülse 14 vermieden ist.

Die Presshülse 16 ist rohrförmig und weist eine zylindrische glatte Innenfläche 32 auf. An der Innenfläche 32 liegt das zwischen die Stützhülse 14 und die Presshülse 16 eingeschobene Rohrende 18 an (Fig. 3). Die Presshülse 16 kann Edelstahl, Aluminium, Kupfer oder andere Metalle bzw. dauerhaft plastisch verformbare Materialien (z.B. Kunststoffe oder Kunststoff/Metall-Verbundwerkstoffe) aufweisen.

Die Presshülse 16 ist mit der Stützhülse 14 unverlierbar verbunden. Hierzu weist die Presshülse 16 an dem der Sechskantmutter zugewandten Ende einen nach innen ragenden Ansatz 34 auf, der einen radial nach außen weisenden Ansatz 36 der Stützhülse 14 hintergreift.

An einer Außenfläche 38 der Presshülse 16 sind zwei ringförmige Verformungsansätze 40,42 vorgesehen. Die ringförmigen Verformungsansätze 40,42 sind den Ringnuten 24 gegenüberliegend angeordnet. Beim Verpressen der Presshülse 16 zusammen mit dem Rohrende 18 werden auf Grund des durch die Verformungsansätze vorgesehenen Materialüberschusses beim Verwenden herkömmlicher Pressbacken, die beispielsweise eine zylindrische Innenfläche aufweisen können, die Verformungsansätze 40,42 radial nach innen gedrückt (Fig. 4). Hierdurch ist gewährleistet, dass die innere Materiallage des Rohrendes 18 in die Ringnuten 24 gedrückt wird und hierbei die O-Ringe (Dichtelemente 26) derart verformt werden, dass ein sicheres Abdichten zwischen dem Rohrende 18 und der Stützhülse 14 erfolgt. Zum Ausgleich von Toleranzen sind die Durchmesser der beiden ringförmigen Verformungsansätze 40,42 unterschiedlich. Im dargestellten Ausführungsbeispiel weist der erste Verformungsansatz 40 einen kleineren Durchmesser d als der zweite Verformungsansatz 42 mit einem Durchmesser D auf. Durch das Vorsehen unterschiedlicher Durchmesser der beiden Verformungsansätze 40,42 wird eine unterschiedliche Menge an Material in die beiden Nuten 24 gedrückt. Hierdurch können insbesondere bei den Dichtelementen 26 auftretende Toleranzen ausgeglichen werden. Hierdurch ist sichergestellt, dass zumindest einer der beiden Dichtelemente 26 die zur Abdichtung erforderliche Verformung erfährt.

Zwischen den beiden Verformungsansätzen 40,42 ist als Fixiereinrichtung für die Backen des Presswerkzeuges eine Fixiernut 44 vorgesehen. Durch die Fixiernut 44 ist die Lage der Pressbacken eindeutig bestimmt.

Die Presshülse 16 weist als Lagekontrolle mehrere am Umfang verteilte Austrittsöffnungen 46 auf. Durch die Austrittsöffnungen ist sichergestellt, dass beim Testen der Dichtigkeit der Verbindung beispielsweise Wasser austreten kann. Sofern die Verbindung noch nicht verpresst ist (Fig. 3) tritt Wasser durch die Austrittsöffnung 46 aus. Bei bekannten Pressfittings, bei denen das Rohrende an der Stützhülse und dem über deren Außenfläche hervorstehende Dichtelemente anliegt, kann bereits ohne Verpressen eine vorübergehende Dichtigkeit erzielt werden. Es kann in sofern auftreten, dass bei dem Dichtigkeitsversuch oder bei Inbetriebnahme kein Wasser austritt, jedoch eine Verbindung noch nicht verpresst ist. Die Austrittsöffnungen 46 dienen ferner dazu, dass vom Monteur einfach erkannt werden kann, ob das Rohrende 18 vollständig in das Fitting eingeschoben wurde.

## Patentansprüche

1. Pressfitting für Kunststoff- oder Mehrschichtverbundrohre, insbesondere mit Metalleinlage, mit
- einer Stützhülse (14) mit einer mindestens eine umlaufende Ringnut (24) aufweisenden Außenfläche (28),
- einem in der Ringnut (24) angeordneten Dichtelement (26) und
- einer plastisch verformbaren Presshülse (16),
- wobei ein anzuschließendes Rohrende (18) über ein freies Ende der Stützhülse (14) auf diese aufschiebbar ist,
**dadurch gekennzeichnet,**
- **dass** das Dichtelement (26) zumindest über die dem freien Ende (23) der Stützhülse (14) zugewandte Flanke (27) der Ringnut (24) nicht übersteht.

2. Pressfitting nach Anspruch 1, **dadurch gekennzeichnet, dass** beide Seitenflanken (25,27) der mindestens einen Ringnut (24) zumindest in Höhe der maximalen Radialerstreckung des Dichtelements (26) enden.

3. Pressfitting nach Anspruch 1 oder 2, **dadurch gekennzeichnet, dass** die Presshülse (16) unverlierbar ist.

4. Pressfitting, nach einem der Ansprüche 1 bis 3, **dadurch gekennzeichnet, dass** mindestens ein Verformungsansatz (40,42) an einer Außenfläche (38) der Presshülse (16) vorgesehen ist und der Ringnut (24) gegenüberliegt, wobei beim Verpressen des Rohrendes (18) zur Abdichtung Rohrmaterial in die Ringnut (24) gepresst wird.

5. Pressfitting nach Anspruch 4, **dadurch gekennzeichnet, dass** der mindestens eine Verformungsansatz (40,42) ringförmig ist.

6. Pressfitting nach einem der Ansprüche 1 bis 5, **dadurch gekennzeichnet, dass** mindestens zwei Ringnuten (24) an der Außenfläche (28) der Stützhülse (14) vorgesehen sind.

7. Pressfitting nach Anspruch 6, **dadurch gekennzeichnet, dass** die Verformungsansätze (40,42) und/oder die Ringnuten (24) unterschiedliche Volumina aufweisen.

8. Pressfitting nach einem der Ansprüche 4 bis 7, **dadurch gekennzeichnet, dass** die Verformungsansätze (40,42) unterschiedliche Außendurchmesser (d,D) aufweisen.

9. Pressfitting nach einem der Ansprüche 3 bis 8, **dadurch gekennzeichnet, dass** die Breite der Verformungsansätze (40,42) größer als die Breite der zugeordneten Ringnuten (24), vorzugsweise mindestens doppelt so breit ist.

10. Pressfitting nach einem der Ansprüche 1 bis 9, **dadurch gekennzeichnet, dass** die Presshülse (16) eine glatte Innenfläche (32) aufweist.

11. Pressfitting nach einem der Ansprüche 1 bis 10, **dadurch gekennzeichnet, dass** die Presshülse (16) unverlierbar mit der Stützhülse (14) verbunden ist.

12. Pressfitting nach einem der Ansprüche 1 bis 11, **gekennzeichnet durch** eine Fixiereinrichtung (44) zur lagegenauen Anordnung eines Presswerkzeugs an der Presshülse (16).

13. Pressfitting nach Anspruch 12, **dadurch gekennzeichnet, dass** als Fixiereinrichtung zwischen zwei benachbarten ringförmigen Verformungsansätzen (40,42) eine Fixiernut (44) vorgesehen ist.

14. Pressfitting nach einem der Ansprüche 1 bis 13, **dadurch gekennzeichnet, dass** die Presshülse (16) mindestens eine radial verlaufende Austrittsöffnung (46) aufweist.

## Claims

1. A press fitting for plastics or multi-layered composite pipes, especially with a metal insert, comprising
- a supporting sleeve (14) with an outer surface (28) comprising at least one circumferentially extending annular groove (24),
- a sealing element (26) arranged in the annular groove (24), and
- a plastically deformable compression sleeve (16),
- a pipe end (18) to be connected may be slipped on the supporting sleeve (14) over a free end thereof,
**characterized in that**
- the sealing element (26) does at least not protrude beyond the flank (27) of the annular groove (24) facing the free end (23) of the supporting sleeve (14).

2. The press fitting of claim 1, wherein both lateral flanks (25, 27) of the at least one annular groove (24) end at least at the level of the maximum radial extension of the sealing element (26).

3. The press fitting of claim 1 or 2, wherein the compression sleeve (16) is provided in a captive manner.

4. The press fitting of one of claims 1 to 3, wherein at least one deforming protrusion (40, 42) is provided at an outer surface (38) of the compression sleeve (16) and is situated opposite the annular groove (24), wherein during the pressing of the pipe end (18) pipe material is pressed into the annular groove (24) for sealing.

5. The press fitting of claim 4, wherein the at least one deforming protrusion (40, 42) is annular in shape.

6. The press fitting of one of claims 1 to 5, wherein at least two annular grooves (24) are provided on the outer surface (28) of the supporting sleeve (14).

7. The press fitting of claim 6, wherein the deforming protrusions (40, 42) and/or the annular grooves (24) have different volumes.

8. The press fitting of one of claims 4 to 7, wherein the deforming protrusions (40, 42) have different outer diameters (d, D).

9. The press fitting of one of claims 3 to 8, wherein the width of the deforming protrusions (40, 42) is larger than the width of the associated annular grooves (24), preferably at least twice as wide.

10. The press fitting of one of claims 1 to 9, wherein the compression sleeve (16) has a smooth inner surface (32).

11. The press fitting of one of claims 1 to 10, wherein the compression sleeve (16) is captively connected to the supporting sleeve (14).

12. The press fitting of one of claims 1 to 11, **characterized by** a fixing means (44) for a positionally accurate application of a compression tool to the compression sleeve (16).

13. The press fitting of claim 12, wherein a fixing groove (44) is provided as a fixing means between two adjacent annular deforming protrusions (40, 42).

14. The press fitting of one of claims 1 to 13, wherein the compression sleeve (16) comprises at least one radially extending exit opening (46).

## Revendications

1. Raccord à sertir pour des tuyaux en plastique ou en matériau composite stratifié, en particulier avec un insert métallique, avec
- une douille de support (14) avec une face extérieure (28) présentant au moins une gorge annulaire (24),
- un élément d'étanchéité (26) disposé dans la gorge annulaire (24),
- une douille de serrage (16) déformable plastiquement, et
- dans lequel une extrémité de tuyau à raccorder (18) peut être engagée sur la douille de support (14) par une extrémité libre de celle-ci,
**caractérisé en ce que**
- l'élément d'étanchéité (26) n'est pas saillant au moins au-delà du flanc (27) de la gorge annulaire (24) orienté vers l'extrémité libre (23) de la douille de support (14).

2. Raccord à sertir selon la revendication 1, **caractérisé en ce que** les deux flancs latéraux (25, 27) de la au moins une gorge annulaire (24) se terminent au moins à hauteur de l'extension radiale maximale de l'élément d'étanchéité (26).

3. Raccord à sertir selon la revendication 1 ou 2, **caractérisé en ce que** la douille de serrage (16) est imperdable.

4. Raccord à sertir selon l'une quelconque des revendications 1 à 3, **caractérisé en ce qu'**au moins une zone de déformation (40, 42) est prévue sur une face extérieure (38) de la douille de serrage (16) et est située en face de la gorge annulaire (24), de la matière du tuyau étant pressée dans la gorge annulaire (24) lors du serrage de l'extrémité de tuyau (18) en vue de l'étanchéité.

5. Raccord à sertir selon la revendication 4, **caractérisé en ce que** la au moins une zone de déformation (40, 42) est annulaire.

6. Raccord à sertir selon l'une quelconque des revendications 1 à 5, **caractérisé en ce qu'**il est prévu au moins deux gorges annulaires (24) dans la face extérieure (28) de la douille de support (14).

7. Raccord à sertir selon la revendication 6, **caractérisé en ce que** les zones de déformation (40, 42) et/ou les gorges annulaires (24) présentent des volumes différents.

8. Raccord à sertir selon l'une quelconque des revendications 4 à 7, **caractérisé en ce que** les zones de déformation (40, 42) présentent des diamètres extérieurs (d, D) différents.

9. Raccord à sertir selon l'une quelconque des revendications 3 à 8, **caractérisé en ce que** la largeur des zones de déformation (40, 42) est plus grande que la largeur des gorges annulaires (24) associées, et sont de préférence au moins deux fois plus larges.

10. Raccord à sertir selon l'une quelconque des revendications 1 à 9, **caractérisé en ce que** la douille de serrage (16) présente une face intérieure lisse (32).

11. Raccord à sertir selon l'une quelconque des revendications 1 à 10, **caractérisé en ce que** la douille de serrage (16) est assemblée de façon imperdable à la douille de support (14).

12. Raccord à sertir selon l'une quelconque des revendications 1 à 11, **caractérisé par** un dispositif de fixation (44) pour la disposition précise d'un outil de serrage sur la douille de serrage (16).

13. Raccord à sertir selon la revendication 12, **caractérisé en ce qu'**il est prévu une rainure de fixation (44) comme dispositif de fixation entre deux zones de déformation annulaires voisines (40, 42).

14. Raccord à sertir selon l'une quelconque des revendications 1 à 13, **caractérisé en ce que** la douille de serrage (16) présente au moins une ouverture de sortie (46) orientée radialement.
